# EUROPÄISCHE PATENTANMELDUNG

(11) **EP 0 860 639 A1**
(43) Veröffentlichungstag der Anmeldung: **26.08.1998**
(21) Anmeldenummer: 98101775.9
(22) Anmeldetag: 03.02.1998
(51) Int. Cl.: F16L 11/04, F16L 11/12

(54) **Brauseschlauch**

(30) Priorität: 20.02.1997 DE 19706669
(71) Anmelder: FRIEDRICH GROHE AKTIENGESELLSCHAFT, D-58675 Hemer (DE)
(72) Erfinder: Bechte, Veit, 59439 Holzwickede (DE)

(57) **Zusammenfassung**

Bei einem Brauseschlauch, insbesondere Küchenspülbrauseschlauch für Spültische etc., aus einem elastischen Kunststoffwerkstoff ist zur Verbesserung vorgeschlagen, daß der Brauseschlauch wenigstens zweischalig ausgebildet ist und einen Innenschlauch hat, der aus einem lebensmittelrechtlich unbedenklichen Werkstoff hergestellt hat, wobei auf dem Außenmantel des Innenschlauchs im Koextrudierverfahren ein Außenschlauch aus einem verschleißfesten und dauergebrauchstauglichen Werkstoff aufgespritzt ist.

## Beschreibung

Die Erfindung betrifft einen Brauseschlauch, insbesondere einen Küchenspülbrauseschlauch für Spültische etc., aus einem elastischen Kunststoffwerkstoff.

Derartige Brauseschläuche sind bekannt und werden in der Regel aus Weichpolyvinylchlorid hergestellt. In jüngerer Zeit werden zunehmend derartige Brauseschläuche in verschiedenen Ländern lebensmittelrechtlich als bedenklich angesehen.

Außerdem ist aus der deutschen Patentschrift 3120895 C2 ein Brauseschlauch vorbekannt, der zwischen einem Innen- und Außenschlauch eine schraubenförmig angeordnete Armierungswendel aufweist.
Ferner ist aus der deutschen Offenlegungsschrift 2010021 ein mehrschaliger Schlauch vorbekannt, der von einem Innenschlauch, bzw. einer Schlauchseele aus einem durchflußmediumbeständigen Werkstoff, bzw. einem treibstoffbeständigen Gummi und einen dauergebrauchsfesten Außenschlauch, bzw. einem Außenschlauch aus einer abriebfesten Gummimischung aufgebaut ist.

Aus der deutschen Offenlegungsschrift 4432385 A1 ist schließlich ein heißwasserbeständiger Druckschlauch mit einem aus lebensmittelechtem Elastomer hergestellten Innen- und Außenschlauch bekannt, wobei zwischen Innen- und Außenschlauch ein Geflecht zur Armierung angeordnet ist. Für den Außen- und Innenschlauch ist als Werkstoff Silikon vorgeschlagen.

Der Erfindung liegt die Aufgabe zugrunde, den eingangs aufgeführten einschaligen Brauseschlauch zu verbessern, so daß insbesondere der Brauseschlauch lebensmittelrechtlich unbedenklich ist und eine lange Gebrauchsdauer ermöglicht.

Diese Aufgabe wird erfindungsgemäß dadurch gelöst, daß der Brauseschlauch wenigstens zweischalig ausgebildet ist und einen Innenschlauch hat, der aus einem lebensmittelrechtlich unbedenklichen Werkstoff hergestellt ist, wobei auf dem Außenmantel des Innenschlauchs im Koextrudierverfahren ein Außenschlauch aus einem verschleißfesten und dauergebrauchstauglichen Werkstoff aufgespritzt ist.

Weitere Ausgestaltungen der Erfindung sind in den Ansprüchen 2 und 3 angegeben.

Ein Ausführungsbeispiel der Erfindung ist in der Zeichnung dargestellt und wird im folgenden näher beschrieben. Es zeigt
- Fig. 1: einen Teil eines Innenschlauchs, auf dem der Außenschlauch im Koextrudierverfahren aufgespritzt wird in schematischer Darstellung im Längsschnitt;
- Fig. 2: einen aus einem Innen- und Außenschlauch gebildeten Brauseschlauch in Stirnansicht.

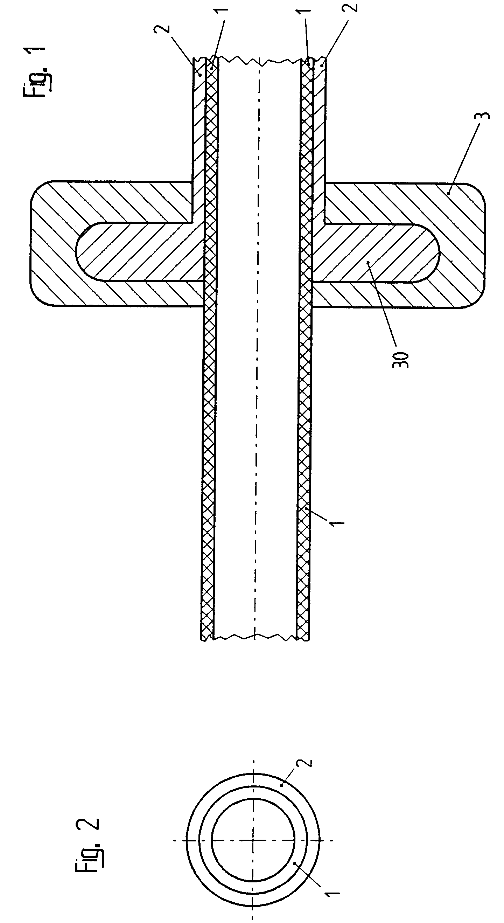

Der in Fig. 1 und 2 dargestellte Brauseschlauch aus Kunststoff ist zweischalig ausgebildet und besteht aus einem Innenschlauch 1 und einem Außenschlauch 2. Der Innenschlauch 1 ist aus einem lebensmittelrechtlich unbedenklichen Werkstoff hergestellt. Als Werkstoff für den Innenschlauch 1 hat sich Polyurethan (PUR) als besonders geeignet herausgestellt. Der Außenschlauch 2 wird dagegen vorteilhaft als Weichpolyvinylchlorid (PVC) hergestellt. Mit diesem Werkstoff für den Außenschlauch 2 wird dem Brauseschlauch eine hohe Verschleißfestigkeit gegeben und damit eine lange Lebensdauer ermöglicht.
Auf dem zunächst erzeugten Innenschlauch aus Polyurethan (PUR) wird mit dem Koextrudierverfahren der Außenschlauch aus Weichpolyvinylchlorid (PVC) aufgespritzt. Wie es aus Figur 1 der Zeichnung zu entnehmen ist, ist hierbei eine Koextrusionsdüse 3 vorgesehen, dessen Ringdüsenkammer 30 von einem in der Zeichnung nicht dargestellten Extruder mit Polyvinylchlorid versorgt wird. Der Innenschlauch 1 wird vor der Koextrusionsdüse 3 ebenfalls in einer in der Zeichnung nicht dargestellten Extrusionsdüse erzeugt. Der Innenschlauch 1 bildet mit dem koextrudierten Außenschlauch 2 einen einstückigen Brauseschlauch.

Bei einem derartigen Brauseschlauch kann somit die trinkwasserbenetzte Schlauchinnenoberfläche aus einem die lebensmittelrechtlichen Anforderungen erfüllenden Material, wie Polyurethan hergestellt werden, während die nicht trinkwasserbenetzte Restwandstärke des Schlauches aus einem Material, beispielsweise Weichpolyvinylchlorid, hergestellt werden kann, mit dem die Anforderungen einer hohen Lebensdauer erfüllbar sind. Mit dem Koextrudierverfahren wird der Innenschlauch 1 innig mit dem Außenschlauch 2 verbunden. Durch die Verwendung der beiden unterschiedlichen Materialien können daher sowohl die lebensmittelrechtlichen als auch die lebensdauerrelevanten Anforderungen mit dem Brauseschlauch erfüllt werden.

## Patentansprüche

1. Brauseschlauch, insbesondere Küchenspülbrauseschlauch für Spültische etc. aus einem elastischen Kunststoffwerkstoff, dadurch gekennzeichnet, daß der Brauseschlauch wenigstens zweischalig ausgebildet ist und einen Innenschlauch (1) hat, der aus einem lebensmittelrechtlich unbedenklichen Werkstoff hergestellt ist, wobei auf dem Außenmantel des Innenschlauchs (1) im Koextrudierverfahren ein Außenschlauch (2) aus einem verschleißfesten und dauergebrauchstauglichen Werkstoff aufgespritzt ist.

2. Brauseschlauch nach Anspruch 1, dadurch gekennzeichnet, daß der Innenschlauch (1) aus Polyurethan (PUR) hergestellt ist.

3. Brauseschlauch nach Anspruch 1 oder 2, dadurch gekennzeichnet, daß der Außenschlauch (2) aus Weichpolyvinylchlorid (PVC) hergestellt ist.
